(19) Europäisches Patentamt
European Patent Office
Office européen des brevets

(11) **EP 3 347 692 B1**

(12) **EUROPÄISCHE PATENTSCHRIFT**

(45) Veröffentlichungstag und Bekanntmachung des Hinweises auf die Patenterteilung:
**08.03.2023   Patentblatt 2023/10**

(21) Anmeldenummer: **16782008.3**

(22) Anmeldetag: **30.08.2016**

(51) Internationale Patentklassifikation (IPC):
*G01N 15/14* (2006.01)   *B01L 3/00* (2006.01)
*B01F 25/433* (2022.01)   *B01F 33/30* (2022.01)
*B01F 33/3011* (2022.01)

(52) Gemeinsame Patentklassifikation (CPC):
**G01N 15/1404; B01F 25/4331; B01F 33/30;**
**B01F 33/3011; B01L 3/502776;** B01L 2200/0647;
B01L 2300/0816; B01L 2300/0874;
B01L 2300/0887; B01L 2400/0487;
G01N 2015/1413

(86) Internationale Anmeldenummer:
**PCT/DE2016/100390**

(87) Internationale Veröffentlichungsnummer:
**WO 2017/041785 (16.03.2017 Gazette 2017/11)**

(54) **ANORDNUNG UND VERFAHREN ZUR FLUIDROTATION**

ARRANGEMENT AND METHOD FOR FLUID ROTATION

SYSTÈME ET PROCÉDÉ DE ROTATION DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2015   DE 102015115343**

(43) Veröffentlichungstag der Anmeldung:
**18.07.2018   Patentblatt 2018/29**

(73) Patentinhaber: **Leibniz-Institut für Photonische Technologien e.V.**
**07745 Jena (DE)**

(72) Erfinder: **HENKEL, Thomas**
**07751 Jena (DE)**

(74) Vertreter: **Donath, Dirk**
**Patent- und Rechtsanwaltskanzlei**
**Bock Bieber Donath Partnerschaftsgesellschaft**
**Humboldtstraße 18**
**07743 Jena (DE)**

(56) Entgegenhaltungen:
**US-A1- 2002 076 350     US-A1- 2007 177 458**
**US-A1- 2009 114 285     US-A1- 2011 176 965**

• **Anonymous: "Reynolds number - Wikipedia", , 1 December 2016 (2016-12-01), XP055325463, Retrieved from the Internet: URL:https://en.wikipedia.org/wiki/Reynolds _number [retrieved on 2016-12-02]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Verfahren und Anordnung für die Fluidrotation mit dreidimensionaler hydrodynamischer Fokussierung in einem Zweilagen-Chipsystem Die Erfindung betrifft ein Verfahren und eine Anordnung für die Fluidrotation für den Einsatz in einem Zweilagen-Chipsystem bei Fluid-Transportgeschwindigkeiten mit niedrigen Reynoldszahlen, insbesondere bei Reynoldszahlen Re < 50, insbesondere für eine dreidimensionale hydrodynamische Fokussierung, insbesondere für die bildbasierte Untersuchungen in einer Durchfluss-Messzelle, zum Beispiel bei der Durchfluss-Zytometrie.

Für Durchflussmesszellen sind Fluid-Strukturen bekannt, die es ermöglichen, dass die zu untersuchende Probelösung einschließlich der darin enthaltenen Partikel und / oder zu untersuchenden Moleküle in der Fokusebene innerhalb des Tiefenschärfebereiches des abbildenden Systems durchlaufen. Diese Bildebene ist typischerweise parallel zur Chipebene angeordnet, jedoch sind auch Anwendungsfälle mit davon abweichender Orientierung der Bildebene bekannt.

Für die Herstellung von Durchfluss-Küvettensystemen sind sowohl Zwei- als auch Drei- und Mehrlagensysteme bekannt. Dabei zeichnen sich Zweilagensysteme durch die gute optische Zugänglichkeit der integrierten Kanalstrukturen und den geringen Herstellungsaufwand aus. Der breiten Anwendung derartiger Zweilagensysteme, zum Beispiel als Küvettensysteme für die Durchfluss-Zytometrie, steht bislang die fehlende Verfügbarkeit von Funktionsstrukturen für die zuverlässige Erzeugung der erforderlichen Fluidstrukturen im Bereich der Detektionsküvette entgegen. Diese beinhalten eine dreidimensionale hydrodynamische Fokussierung bei vorzugsweise geringen Transportgeschwindigkeiten zur Vermeidung von Bewegungsunschärfe. Die erfindungsgemäße Anordnung und Verfahren geben eine Lösung für diese Aufgabenstellung an.

Gemäß dem derzeitigen Stand der Technik sind für Zweilagen-Chipsysteme zweidimensionale hydrodynamische Fokussierungen bekannt, die senkrecht zur Chipebene arbeiten. Bei dieser Variante der hydrodynamischen Fokussierung werden Hilfsflüssigkeiten über Hilfskanäle seitlich in den Hauptkanal gedrückt, die den zu untersuchenden Fluidstrom einengen bzw. zusammendrücken und damit fokussieren. Es entsteht eine Fluidlamelle mit einer Ausrichtung senkrecht zur Ebene des Zweilangen-Chipsystems [Xuan, X., Zhu, J. & Church, C., (2010) Particle focusing in microfluidic devices Microfluid. Nanofluid. Vol. 9(1), pp. 1-16 ].

Fluidfokussierungen sind des Weiteren durch eine entsprechende Formgestaltung des Kanals und geeignete Einbauten (Trichter, Schlitze, Schlangelinien, Blenden, usw.) möglich.

Dabei ist die erstgenannte hydrodynamische Fokussierung besser steuerbar als starre Fokussierungen durch Formgestaltungen des Kanals.

Um eine dreidimensionale hydrodynamische Fokussierung zu realisieren, müsste entweder ein weiteres, um 90 Grad rotiertes Zweilangen-Chipsystem für eine weitere zweidimensionale hydrodynamische Fokussierung senkrecht zur Orientierung der ersteren nachgeschaltet werden.

Oder man müsste den Fluidstrom selbst um 90 Grad um die Strömungsachse drehen, um ihn anschließend durch eine weitere zweidimensionale hydrodynamische Fokussierung gleicher Bauartzu leiten. Eine solche Rotation ist im Stand der Technik nur als Anordnung und Verfahren in einem Drei- oder Mehrlagen-Chipsystem bekannt (siehe US 2007/0177458 A1).

Geht man zur Veranschaulichung von einem Dreilagen-Chipsystem aus, dessen Chipebene horizontal liegt, so wird dabei der Fluidstrom aus einem Kanalsegment der oberen Chiplage in einen Transfer-Kanal in einer mittleren Chiplage geleitet, der in ein weiteres Kanalsegment der unteren Kanalebene übergeht, das winklig bzw. nicht parallel zum Kanalsegment in der oberen Ebene verläuft. Durch die mehrfache Richtungsänderung wird letztendlich eine Rotation des Fluidstroms erreicht.

US 2009/114285 A1 offenbart eine Strömungskanalstruktur umfassend einen ersten Einführteil, der eine Probe einführt, einen zweiten Einführteil, der ein Fluid zum Einschließen der Probe einführt, einen Austragsteil, der die Probe entlädt, einen gebogenen Teil, an dem ein Strömungskanal um ungefähr 90 Grad um die Y-Achse gebogen ist, wobei die Einführungsrichtung der Probe die X-Achse ist, und einen gebogenen Teil, bei dem der Strömungskanal um ungefähr 90 Grad um die X-Achse gebogen ist.

Beim Betreiben dieser Strömungskanalstruktur wird die Probenflüssigkeit entlang einer Einführungsrichtung der Probe gefördert, durchläuft ein Biegeteil und wird dabei in etwa 90 Grad um eine Z-Achse gebogen. Anschließend wird die Probenflüssigkeit gebogen und in eine positive Y-Achsenrichtung gefördert, während sie durch das Biegeteil hindurchgeht. Auf der stromabwärts gelegenen Seite des Biegeteils wird der Strömungskanal an einem Biegeteil bei etwa 90 Grad um eine X-Achse gebogen, so dass die Probenflüssigkeit beim Durchlaufen des Biegeteils in Richtung einer Position Z-Achsenrichtung gefördert wird. Zusätzlich wird der Strömungskanal an einem Biegeteil um etwa 90 Grad um eine Y-Achse gebogen, so dass die Probenflüssigkeit in eine Position X-Achsenrichtung gefördert wird. Das Biegen bei etwa 90 Grad kann im Uhrzeigersinn oder gegen den Uhrzeigersinn erfolgen, und eine Richtung kann entsprechend den Anforderungen der Umstände gewählt werden.

Auf der stromabwärts gelegenen Seite des Biegeteils wird die Flüssigkeit durch die zweiten Einführungsteile weiter eingeführt, um die Probenflüssigkeit von der linken und rechten Seite sandwichartig einzuschließen. Bei dieser Struktur wird die auf den zentralen Abschnitt des Strömungskanals in der Strömungskanalstruktur konzentrierte Probe aus dem Austragsteil gefördert.

In der in Figur 1 der US 2009/114285 A1 dargestellten Strömungskanalstruktur wird die durch das erste Einführungsteil eingeleitete Probe durch das durch die zweiten Einführungsteile eingeleitete Fluid sandwichartig eingeschlossen, und ihre horizontale Breite wird, wie in Figur 2 der US 2009/114285 A1 dargestellt, schmaler. Nach einer Drehung um etwa 90 Grad um die Z-Achse dreht sich die Probenflüssigkeit dann um die Y- und die X-Achse, und dementsprechend ist ihre Schnittform in vertikaler Richtung (Z-Achsenrichtung) schmaler. Weiterhin wird die Probenflüssigkeit durch die durch die zweiten Einführungsteile eingeleitete Flüssigkeit eingeklemmt. Auf diese Weise kann eine laminare Strömung erreicht werden, bei der die Probe auf den zentralen Teil des Strömungskanals konzentriert wird.

US 2002/076350 A1 offenbart eine multifluidische Vorrichtung und ein Verfahren, um die Detektion eines Diffusionsmusters zu verbessern, das durch Partikel gebildet wird, die zwischen mindestens zwei Flüssigkeitsströmen parallel laminarer Strömung diffundieren, so dass eine Grenzfläche zwischen ihnen gebildet wird, indem die Dimension der Ströme in der Diffusion direkt vergrößert wird. Dies kann erreicht werden, indem die Ströme durch eine Umwandlungswindung fließen oder indem die Ströme durch einen Kanal mit divergierenden Wänden geleitet werden. Vorrichtungen und Verfahren werden auch bereitgestellt, um die Diffusion zwischen zwei Strömen zu verbessern, umfassend das Ändern der Schnittstelle zwischen den Strömen von einer schmalen Schnittstelle zu einer breiten Schnittstelle. US 2007/177458 A1 offenbart ein Verfahren zum Mischen von Fluidströmen in mikrofluidischen Mischern und Chips, welche für die Erzeugung eines topologischen Mischschemas verwendet werden, das die Laminarität der Strömung nutzt, um die Strömung wiederholt zu falten und die Konzentrationsgradienten exponentiell zu erhöhen, um dadurch ein schnelles und effizientes Mischen durch Diffusion zu erhalten. Dieses Verfahren basiert auf wendelförmigen Strömungskanälen mit entgegengesetzten Chiralitäten, welche den Fluidstrom in eine Topologie, die an eine Reihe von MÖBIUS-Bändern erinnert, aufspalten und rekombinieren. Diese Geometrie wird in einer einfachen sechsstufigen, zweischichtigen Elastomerstruktur mit einer Grundfläche von 400 $\mu$m x 300 $\mu$m pro Stufe realisiert, welche zwei Lösungen effizient bei Reynoldszahlen zwischen 0,1 und 2 mischt. Dies bedeutet eine Verringerung der Größe von Mikrofluidmischern um mehr als eine Größenordnung gegenüber bekannten Mischern.

Die Aufgabe der vorliegenden Erfindung besteht darin, ausgehend von der US 2009/1 14285 A1 ein Verfahren und eine Anordnung für die Fluidrotation in einem Zweilagen-Chipsystem anzugeben, so dass zusammen mit vor- und nachgeschalteten zweidimensionalen hydrodynamischen Fokussierungen eine dreidimensionale hydrodynamische Fokussierung in einem einzigen Zweilagen-Chipsystem realisiert werden kann.

Erfindungsgemäß wird diese Aufgabe durch die kennzeichnenden Merkmale des 1. bzw. 2. Patentanspruchs gelöst.

Die technische Lösung besteht darin, dass winklig zueinander ausgerichtete Strömungskanalsegmente hintereinander angeordnet sind, insbesondere Mikrokanäle in einem Zweilangen-Chipsystem, wobei der Fluidstrom beim Durchfließen der Übergänge zwischen den Kanälen um die Flussachse um jeweils um einen Winkel $\alpha$ gedreht wird, der von der Kanalgeometrie und vom Winkel $\beta$ zwischen den Kanalsegmenten abhängt, wobei dieser Winkel $\beta$ die Abweichung von einer geradlinigen bzw. parallelen Anordnung der verbunden Kanalsegmente angibt.

Für die Vielfalt der möglichen Kanalgeometrien, insbesondere der Form der Kanalquerschnitte, und der möglichen Ausformungen der Übergänge zwischen den Kanalsegmenten ist eine Berechnung des resultierenden Winkels der Fluidrotation mit einem CFD-Verfahren (computational fluid dynamics) möglich. Exemplarisch wird die Erfindung anhand eines halbrunden Kanalquerschnittes, eines halbkugelförmigen Kanalsegmentendes und eines deckungsgleichen Übergangs zwischen den Kanalsegmenten beschrieben.

Softwaresysteme für die Durchführung dieser Modellierungen sind sowohl als Bestandteil kommerzieller CAD Systeme (z.B. SolidWorks®) als auch als separate Systeme von kommerziellen Anbietern (z.B. Ansys, Fluent, COMSOL) oder als Open Source Toolkits (z.B. OpenFoam®) dem Fachmann zugänglich. Die Anwendung der zugrundeliegenden numerischen Finite Elemente Verfahren ist Bestandteil der Hochschulausbildung in ingenieurtechnischen Studiengängen und somit dem geschulten Fachmann vertraut.

Die Erfindung wird nachstehend an Hand der schematischen Zeichnungen und des Ausführungsbeispiels näher erläutert. Dabei zeigt:

Fig. 1: eine schematische Darstellung einer Ausführungsform der Vorrichtung zur Fluidrotation in einem System zur dreidimensionalen hydrodynamischen Fokussierung,
Fig. 2: eine schematische Darstellung des Zweilangen-Chipsystems gemäß Fig. 1,

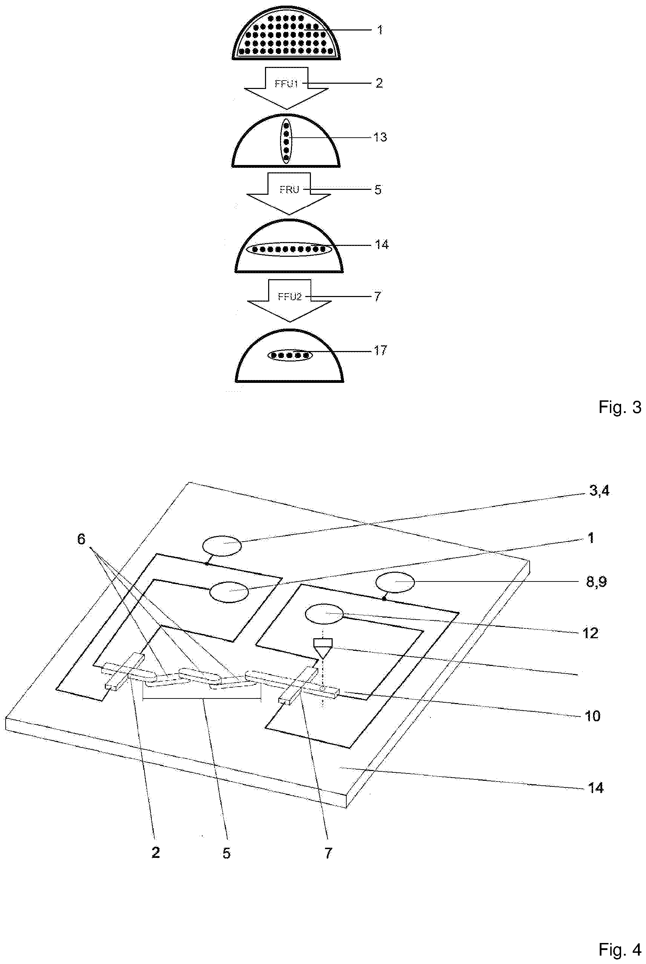

Fig. 3: eine schematische Darstellung der Querschnitte der Fluidkanale gemäß Fig. 2,
Fig. 4: eine schematische Darstellung einer Ausführungsform der Vorrichtung zur Fluidrotation in einem System zur dreidimensionalen hydrodynamischen Fokussierung in einem Zweilangen-Chipsystem und
Fig.5a/b: eine schematische Darstellung Veranschaulichung der Fluid-Rotation

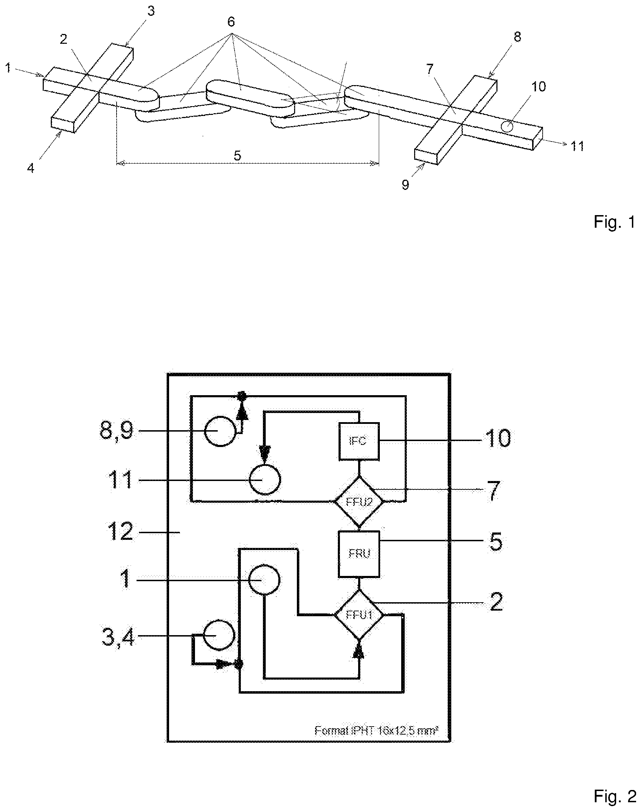

Die in Fig. 1 dargestellte Vorrichtung umfasst die folgenden vier Baugruppen:

- die erste hydrodynamische Fokussierungseinheit (2)

- die erfindungsgemäße Fluid-Rotationseinheit (5)
- die zweite hydrodynamische Fokussierungseinheit (7)
- den Untersuchungskanal bzw. Durchfluss-Messzelle (10), z.B. für bildbasierte Durchfluss-Zytometrie.

Die Fluid-Rotationseinheit (5) besteht aus zwei oder mehreren, hintereinander angeordneten, an ihren Enden miteinander verbundenen Kanalsegmenten (6), wobei die beiden jeweils miteinander verbundenen Kanalsegmente winklig zueinander (und nicht in gerader Linie) angeordnet sind, so dass ein Fluidstrom beim Durchfließen der Übergänge zwischen den Kanalsegmenten (6) jeweils die Richtung ändern muss.

Die Kanalsegmente können in ein beliebiges Substrat eingebracht werden, dass für den Transport des Fluids geeignet ist. Bevorzugt ist das Material optisch-lichtdurchlässiges Glas oder optisch- lichtdurchlässiger Kunststoff, um die Durchfluss-Messzelle direkt in das Zweilagen-Chipsystem zu integrieren.

Besonders vorteilhaft ist das Material Borosilikatglas.

Bei einem Zweilagen-Chipsystem, dessen Chipebene zurVeranschaulichung horizontal ausgerichtet sein soll, sind die Kanalsegmente (6) abwechselnd in das obere und das untere Substrat so eingebracht, so dass nach dem Verbinden der beiden Chiplagen die zuvor offenen Kanäle durch die Oberfläche der jeweils anderen Chiplage geschlossen werden und nur an den Enden der Kanäle eine Verbindung zum nächsten Kanalsegment besteht (siehe dazu Fig. 1).

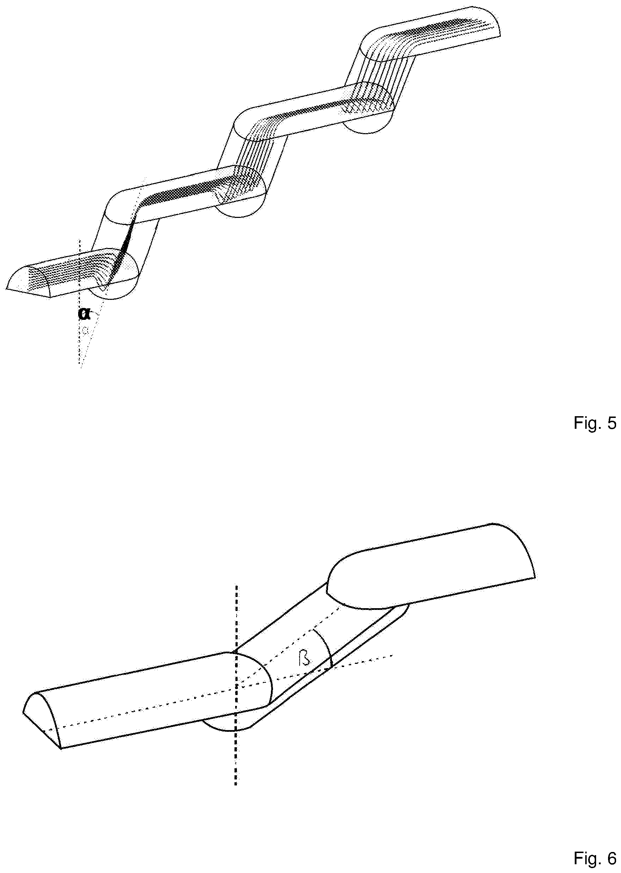

Die Querschnittsgeometrie der Kanäle und die Gestaltung der Kanal-Enden und Übergänge ergeben sich aus den Möglichkeiten der für die Kanal Herstellung verwendeten Technologien. Prinzipiell sind an halbrunde Kanalquerschnitte in Verbindung mit als Kugelsegmenten ausgeführten Endstücken bzw. an diese angenäherte Geometrien (siehe Fig. 5) zu empfehlen.

Weiterhin können Kanäle mit runden bzw. durch Kreissegmente beschreibbaren bzw. an diese angenäherte Geometrien (Ellipsensegmente, Kombinationen aus Kreissegmenten und Trapezen oder Dreiecksflächen) genutzt werden.

Darüber hinaus können trapezförmige oder rechteckige Kanalquerschnitte in Verbindung mit Endstücken, welche durch Rotationskörper dieser Geometrien darstellbar oder an diese approximierte aus Teilflächen zusammengesetzte Geometrien verwendet werden.

Durchfließt das Fluid einen solchen Übergang zum Beispiel von oben nach unten (siehe Fig. 5), so wird das Fluid am Ende des oberen Kanalsegmentes (6) zuerst nach unten umgelenkt. Am Anfang dieses sich anschließenden Kanalsegmentes wird der Fluidstrom sofort erneut umgelenkt und in das untere Kanalsegment geleitet. Durch die Nähe der beiden Kanalsegmentenden gehen die beiden Richtungsänderungen ineinander über und können nur im Zusammenhang betrachtet werden.

Das ist ein deutlicher Unterschied zum Stand der Technik, der Transfer-Kanäle in zwischengeschalteten mittleren Chiplagen verwendet, wodurch sich zwei getrennte Richtungsänderungen abgrenzen lassen.

Weil die beiden verbundenen Kanalsegmente winklig zueinander angeordnet (und nicht in gerader Linie oder parallel zueinander) sind, wird eine Rotation des Fluids um die Strömungsachse bewirkt.

Es können mehrere Übergänge nacheinander angeordnet werden, wobei sich die Rotationen addieren. Dabei folgt eine Fluidlamelle einem möbiusbandartigen Strömungspfad. Es ist darauf zu achten, dass der Richtungssinn der Übergänge beibehalten wird, weil sich die Rotationen sonst subtrahieren bzw. gegenseitig aufheben.

Um eine gewünschte Gesamtrotation des Fluids von 90 Grad zum Beispiel bei einem halbrunden Kanalquerschnitt mit einer Kanalhöhe von 70 $\mu$m und einer Länge der Kanalsegmente von 600 $\mu$m zu bewirken, kann man sechs Übergänge mit einem Knickwinkel von $\beta$ = 32 Grad hintereinander so anordnen, dass eine Gesamtfluidrotation um 90 Grad erzielt wird.

In Fig 5 sind zur Veranschaulichung der Knickwinkel der Kanäle $\beta$ und der Winkel der axialen Rotation $\alpha$ exemplarisch eingezeichnet. Im konkreten Fall wird die angestrebte Fluidrotation um 90 Grad nach Durchlaufen von sechs mit zueinander in einem Winkel von 32 Grad zueinander geknickten Kanal Übergängen erreicht. Dabei ist der Rotationswinkel $\alpha$ der Fluidlamelle in den einzelnen Übergängen nicht einheitlich sondern vielmehr von dem Knickwinkel beta und der jeweiligen Orientierung der einlaufenden Lamelle abhängig.

Das Substrat (12) besteht beispielsweise aus Glas oder Kunststoff und ist in Form eines Zweilangen-Chipsystems ausgeführt, wobei die Eingänge (1, 3, 4, 8, 9) für die Proben- und Hilfsflüssigkeitszufuhr mit geeigneten Pumpen, wie z.B. Spritzenpumpen, Heristaitikpumpen oder druckgetriebenen Fluid-Fördereinrichtungen, flüssigkeitsleitend verbindbar sind.

Beim bestimmungsgemäßen Einsatz der Anordnung für die Fluidrotation in einem Zweilagen-Chipsystem wird diese wie folgt betrieben: Mittels geeigneter Pumpen, wie z.B. Spritzenpumpen, Peristaltikpumpen oder druckgetriebenen Fluid-Fördereinrichtungen, wird das zu untersuchende Fluid in die Probenzufuhr (1) und die Hilfsflüssigkeiten für die hydrodynamischen Fokussierungseinheiten in die entsprechenden Eingänge (3,4, 8, 9) eingebracht.

In der ersten hydrodynamischen Fokussierungseinheit (2) wird die Zufuhr der Hilfsflüssigkeiten (3,4) mit einem solchen Druck ausgeführt, dass aus dem Probenfluid eine senkrecht auf der Chipebene ausgerichtete Fluidlamelle (13) geformt wird. Diese strömt weiter in die Fluid-Rotationseinheit (5).

Beim Passieren der Übergänge zwischen den Kanalsegmenten (6) erfolgt jeweils eine Rotation.

Wie in Fig, 5 dargestellt, gibt es sechs Kanalsegmentübergänge, deren Kanalsegmente jeweils in einem Winkel β von 32 Grad gegeneinander angeordnet sind. Dadurch erfolgen insgesamt sechs Rotationen der Fluids. Der Gesamtwinkel der Fluidrotationen ergibt sich aus der Summe der Teilwinkel zu 90 Grad.

Die zuvor senkrecht auf der Chipebene ausgerichtete Fluidlamelle verlässt den Chip um diesen Winkel um die Transportachse des Fluids gedreht und liegt nun parallel zur Chipebene (14).

In der zweiten hydrodynamischen Fokussierungseinheit (7) wird die Zufuhr der Hilfsflüssigkeiten (8,9) mit einem solchen Druck ausgeführt, die parallel zur Chipebene ausgerichtete Fluidlamelle ein wenig zusammengedrückt wird, um eine homogene Fluidlamelle (17) zu gewinnen, die nicht durch die Kanalwände beeinflusst wird. Damit ist die dreidimensionale hydrodynamische Fokussierung abgeschlossen. Die auf diese Weise geformte Fluidlamelle (17) kann anschließend im Untersuchungskanal bzw. in der Durchfluss-Messzelle (10) einem bildgebenden Verfahren, zum Beispiel einer bildbasierten DurchflussZytometrie, zugeführt werden.

Anschließend wird das Fluid am Probenausgang (11) abgeführt.

Der Vorteil der erfindungsgemäßen Anordnung für die Fluidrotation und des Verfahrens zum Betreiben dieser besteht darin, dass eine Fluidrotation in einem Zweilagen-Chipsystem ermöglicht wird, wobei insbesondere eine vollständige dreidimensionale hydrodynamische Fokussierung in einem einzigen Zweilangen-Chipsystem realisiert werden kann.

Ein weiterer Vorteil der erfindungsgemäßen Anordnung besteht darin, dass die Fluid-Rotation bei geringen Transportgeschwindigkeiten in einem streng laminaren, von viskosen Kräften dominierten und durch geringe Reynolds-Zahlen gekennzeichneten Transportregime durchgeführt werden kann. Daher ist das System für geringen Flussraten und Transportgeschwindigkeiten von wenigen Millimetern pro Sekunde anwendbar. Die dadurch reduzierte Bewegungsunschärfe ermöglicht, im Gegensatz zu etablierten FACS Systemen mit Transportgeschwindigkeiten im Bereich von 1 m/s, vergleichsweise lange Expositionszeiten von bis zu 20 ms ohne erkennbare Bewegungsunschärfe. Damit bietet das erfindungsgemäße System optimale Bedingungen für die fluoreszenz-Imaging-Durchflusszytometrie und die bildbasierte Erfassung intensitätsschwacher optischer Signale unter Vermeidung von Bewegungsunschärfe.

Ein weiterer, verfahrenstechnischer Vorteil ergibt sich aus der Kompatibilität mit geringen Reynolds Zahlen. Eine Vielzahl alternativer Verfahren für die hydrodynamische Fokussierung nutzt Trägheitseffekte der Fluide an im Kanal integrierten geometrischen Strukturen. Zu nennen sind hier die Jet-Bildung an Düsen oder die Nutzung von Dean-Flow Effekten in gekrümmten Kanälen. Diese Effekte treten bei Reynolds Zahlen im Bereich zwischen 50 und 500 auf und die Qualität der dabei erzielten Effekte zeigt eine ausgeprägte Abhängigkeit von der Transportgeschwindigkeit. Für hochviskose Fluide sind mitunter die erforderlichen Reynolds-Zahlen in Mikrokanälen aufgrund der hohen fluidischen Widerstände nur mit Hochdruck-Pumpsystemen darstellbar.

Im Gegensatz dazu ist bei der erfindungsgemäße Anordnung für die Fluidrotation der erzielte Rotationswinel α über den gesamten, von viskosen Kräften bestimmten Flussratenbereich mit Re < 10 unabhängig von der Transportgeschwindigkeit.

Häufig ist eine Anpassung der Dichte der Prozessfluide an die Dichte der zu untersuchenden Partikel erforderlich. Für Pollen-Partikel mit einer Dichte von ca 1.25 g/ccm kann dies z.B. durch die Verwendung einer 50 prozentigen Lösung von Rohrzucker erreicht werden. Für die Dichteanpassung von Zellen mit Dichten im Bereich zwischen 1.005 und 1.2 g/ccm werden häufig Polysaccharide, z.B. Ficoll®400, zugesetzt.

All diese Zusätze bewirken eine hochsignifikante Zuname der Viskosität um einen Faktor von bis zu 20 (30%Ficoll®). Selbst unter diesen Bedingungen bleibt die korrekte Funktion des erfindungsgemäßen Systems hinsichtlich der erzielten Fluidrotation unverändert erhalten.

Der Anwendungsbereich der erfindungsgemäßen Anordnung ist im Bereich der Mikrofluidik verortet. Dabei kommen Mikrokanäle mit einem Durchmesser im Bereich von 2 μm bis zu 0.75 mm zur Anwendung. Diese können mit Flussraten zwischen 1pl/s und 4pl/s im Bereich der Fluid-Rotations-Einheit betrieben werden. Die maximale

Flussrate für Kanäle mit einem Duchmesser von 0.75 mm für Wasser mit einer dynamischen Viskosität von 0.001 Pas innerhalb der Fluid-Rotations-Einheit liegt bei 4μl/s bei einer Reynolds-Zahl von 10. In Ausnahmefällen können die Systeme mit Reynolds-Zahlen bis 50 mit geringfügigen Abstrichen in der Funktion betrieben werden. Die obere Grenze für die anzuwenden Flussraten kann dann mit 20μl/s angegeben werden. Die konkrete Passfähigkeit der verwendeten Prozessparameter im Kontext mit der Dichte und Viskosität der Trägerfluide können anhand der Reynolds-Zahl nachgeprüft werden. Dabei empfiehlt es sich, den jeweiligen hydraulischen Durchmesser der Kanäle als charakteristische Dimension D zu verwenden.

$$Re = rho * U\_MEAN * D\_H / mu$$

mit rho: Dichte, U_MEAN: mittlere Transportgeschwindigkeit, D_H: hydraulischer Durchmesser und mu: dynamische Viskosität.

Die minimal mögliche Flussrate wird lediglich durch die technischen Möglicheiten der verwendeten Pumpsysteme definiert und ist im Bereich von einem Pikoliter pro Sekunde zu verorten.

In Verbindung mit der Verwendung hochviskoser Fluide (z.B. Mineralöle, Polymerlösungen (Lacke, Farben) oder hochviskosen Lebensmitteln (z.B. Joghurt, Quark, Frischkäse) kann die erfindungsgemäße Funktionsstruktur für die Fluid-Rotation auch für Kanalsysteme mit deutlich größerem Durchmesser eingesetzt werden.

Die Obergrenze der Durchflussgeschwindigkeit bei optimaler Funktion (Re <=10) für ein Funktionselement mit gegebenem Durchmesser und gegebener Dichte und Viskosität der Fluide ergibt sich dann aus nachfolgender Relation:

$$U\_Mean = 10 * mu / (rho * D\_H)$$

erreichbaren Transportgeschwindigkeiten.

Bei geringfügigen Abstrichen an der Qualität der Fluidrotation (Re=50) kann die Obergrenze der technischen Anwendbarkeit mit dem fünffachen des ermittelten Wertes angesetzt werden.

Die Herstellung der erfindungsgemäßen Anordnung erfolgt vorzugsweise durch Fügen zweier, mit den entsprechenden Kanalstrukturen ausgestatteten planaren Substrate. Für die Erzeugung der Kanalstrukturen empfehlen sich Fräsverfahren, fotolithografische Strukturierung in Verbindung mit plasma- oder nasschemischen Ätzverfahren, Spritzguss oder Spritzprägen. Einen weiteren Zugang zu den Zielstrukturen bieten die unter dem Fachbegriff 3D- Printing bekannten Rapid-Prototyping Verfahren, In diesem Fall kann das Zielsystem als monolithisches Bauteil mit vergrabenen Kanalstrukturen in der erfindungsgemäßen Anordnung präpariert werden.

Alle in der Beschreibung, den Ausfuhrungsbeispielen und den nachfolgenden Ansprüchen dargestellten Merkmale können sowohl einzeln als auch in beliebiger Kombination miteinander erfindungswesentlich sein. Die Erfindung ist ausschließlich durch die Ansprüche definiert.

Bezugszeichenliste

1     - Probenzufuhr

2     - erste hydrodynamische Fokussierungseinheit

3     - Hilfsflüssigkeit (Trägerfluid) 1 für erste Fokussierungseinheit

4     - Hilfsflüssigkeit (Trägerfluid) 2 für erste Fokussierungseinheit

5     - Fluid-Rotationseinheit

6     - winklig zueinander angeordnete Kanalsegmente

7     - zweite hydrodynamische Fokussierungseinheit

8     - Hilfsflüssigkeit (Trägerfluid) 1 für zweite Fokussierungseinheit

9     - Hilfsflüssigkeit (Trägerfluid) 2 für zweite F okussierungseinheit

10    - Untersuchungskanal, z.B. für bildbasierte Durchfluss-Zytometrie

11    - Probenausgang

12    - Substrat des Zweilagen-Chipsysiems

13    - Fluidlamelle nach der ersten hydrodynamischen Fokussierungseinheit

14    - Fluidlamelle nach der Fluidrotation

**Patentansprüche**

1. Verfahren zur Fluidrotation mit dreidimensionaler hydrodynamischer Fokussierung in einem Zweilagen-Chipsystem, bei dem Kanalsegmente (6) abwechselnd in das obere und das untere Substrat so eingebracht sind, dass nach dem Verbinden der beiden Chiplagen die zuvor offenen Kanäle durch die Oberfläche der jeweils anderen Chiplage zu Mikrokanälen geschlossen werden und nur an den Enden der Mikrokanäle eine Verbindung zum nächsten Kanalsegment (6) besteht, bei Fluid-Transportgeschwindigkeiten mit Reynoldszahlen Re< 10, bei dem das zu rotierende Medium hintereinander angeordnete und miteinander verbundene, winklig zueinander angeordnete Mikrokanäle passiert, wodurch das durchfließende Medium jeweils Richtungsänderungen durchläuft, die insgesamt eine Rotation des Mediums um die Achse in Strömungsrichtung bewirken, wobei der Fluidstrom beim Durchfließen der Kanalübergänge zwischen den Mikrokanälen um die Flussachse um jeweils einen Winkel $\alpha$ gedreht wird, welcher von der Kanalgeometrie und vom Winkel $\beta$ zwischen den Kanalsegmenten (6) abhängt, **dadurch gekennzeichnet, dass**

die Mikrokanäle mit einem halbrunden Kanalquerschnitt ausgeführt werden,
das Fluid sechs mit zueinander in einem Winkel $\beta$ von 32 Grad zueinander geknickten Kanalübergängen durchläuft, wobei der Rotationswinkel $\alpha$ einer Fluidlamelle in den einzelnen Übergängen nicht einheitlich sondern vielmehr von dem Knickwinkel $\beta$ und der jeweiligen Orientierung der einlaufenden Lamelle abhängig ist, so dass insgesamt sechs Rotationen des Fluids erfolgen und der Gesamtwinkel der Fluidrotationen in Summe der Teilwinkel 90 Grad ergibt und dass vor der Fluidrotation eine hydrodynamische Fokussierung durchgeführt wird, indem die Zufuhr von Hilfsflüssigkeiten mit einem solchen Druck ausgeführt wird, dass eine senkrecht zur Chipebene ausgerichtete Fluidlamelle erzeugt wird, welche durch die Fluidrotation um die Flussachse gedreht wird, und nach dieser Fluidrotation, die auf 90 Grad eingestellt wird, eine zweite hydrodynamische Fokussierung durchgeführt wird, wodurch die parallel zu Chipebene ausgerichtete homogene Fluidlamelle umformt wird, in dem in der zweiten hydrodynamischen Fokussierungseinheit die Zufuhr der Hilfsflüssigkeiten mit einem solchen Druck ausgeführt wird, dass die parallel zur Chipebene ausgerichtete Fluidlamelle ein wenig zusammengedrückt wird, um eine homogene Fluidlamelle zu gewinnen, die nicht durch die Kanalwände beeinflusst wird, so dass sie insbesondere von den Kanalwänden freigehalten wird.

2. Anordnung für die Durchführung eines Verfahrens gemäß Anspruch 1 in Form einer Fluid-Rotationseinheit (5) in einem Zweilagen-Chipsystem, bei dem Kanalsegmente (6) als Mikrokanäle abwechselnd in das obere und das untere Substrat so eingebracht sind, dass nach dem Verbinden der beiden Chiplagen die zuvor offenen Kanäle durch die Oberfläche der jeweils anderen Chiplage geschlossen werden und nur an den Enden der Mikrokanäle eine Verbindung zum nächsten Kanalsegment vorhanden ist, bestehend aus sechs hintereinander angeordneten, an ihren Enden versetzt oder seitlich miteinander verbundenen Kanalsegmenten (6) mit halbrundem Kanalquerschnitt, wobei die beiden jeweils miteinander verbundenen Kanal Segmente (6) in einem Winkel $\beta$ von 32 Grad zueinander angeordnet sind, wobei in das Zweilagen-Chipsystem vor der Anordnung für die Fluidrotation (5) eine hydrodynamische Fokussierungseinheit (2) und nach der Anordnung für die Fluidrotation eine zweite hydrodynamische Fokussierungseinheit (7) eingebracht ist.

**Claims**

1. Method for fluid rotation with three-dimensional hydrodynamic focusing in a two-layer chip system, in which channel segments (6) are introduced alternately into the upper and the lower substrate in such a way that, after the two chip layers have been connected, the previously open channels are closed to form microchannels by the surface of the respective other chip layer and a connection to the next channel segment (6) exists only at the ends of the microchannels, at fluid transport velocities with Reynolds numbers Re < 10, in which the medium to be rotated passes through microchannels which are arranged one behind the other and are connected to one another and are arranged at an angle to one another, as a result of which the medium flowing through in each case undergoes changes in direction which, overall, cause the medium to rotate about the axis in the direction of flow, the fluid flow being rotated about the flow axis by an angle $\alpha$ in each case as it flows through the channel transitions between the microchannels, which angle $\alpha$ depends on the channel geometry and on the angle $\beta$ between the channel segments, **characterized in that**

- the microchannels are designed with a semicircular channel cross-section,
- the fluid passes through six channel transitions bent at an angle $\beta$ of 32 degrees to one another, the angle of rotation $\alpha$ of the fluid lamella in the individual transitions not being uniform but rather dependent on the bending angle $\beta$ and the respective orientation of the incoming lamella, so that a total of six rotations of the fluids take place and the total angle of the fluid rotations in the sum of the partial angles results in 90 degrees
- and that before the fluid rotation a hydrodynamic focusing is carried out, in which the supply of auxiliary fluids is carried out with such a pressure that a fluid lamella oriented perpendicular to the chip plane is produced, which is rotated about the flow axis by the fluid rotation, and after this fluid rotation, which is set to 90 degrees, a second hydrodynamic focusing is carried out, whereby the homogeneous fluid lamella aligned parallel to the chip plane is reshaped, in which in the second hydrodynamic focusing unit the supply of the auxiliary fluids is carried out with such a pressure that the fluid lamella aligned parallel to the chip plane is slightly compressed in order to obtain a homogeneous fluid lamella which is not influenced by the channel walls, so that it is in particular kept free from the channel walls.

2. Arrangement for carrying out a method according to claim 1 in the form of a fluid rotation unit (5) in a two-layer chip system, in which channel segments (6) are introduced as microchannels alternately into the upper and the lower substrate in such a way that, after the two chip layers have been connected, the previously open channels are closed by the surface of the respective other chip layer and a connection to the next channel segment is only present at the ends of the microchannels, consisting of six channel segments (6) with semicircular channel cross-section arranged one behind the other and connected to one another at their ends in an offset manner or laterally, the two channel segments (6) connected to one another in each case being arranged at an angle $\beta$ of 32 degrees to one another, a hydrodynamic focusing unit (2) being introduced into the two-length chip system before the arrangement for the fluid rotation (5) and a second hydrodynamic focusing unit (7) being introduced after the arrangement for the fluid rotation.

## Revendications

1. Procédé de rotation de fluide avec focalisation hydrodynamique tridimensionnelle dans un système de puces à deux couches, dans lequel des segments de canal (6) sont introduits en alternance dans le substrat supérieur et le substrat inférieur de telle sorte qu'après la liaison des deux couches de puces, les canaux précédemment ouverts sont fermés en microcanaux par la surface de l'autre couche de puces respective et qu'il n'existe une liaison avec le segment de canal suivant (6) qu'aux extrémités des microcanaux, avec des vitesses de transport de fluide avec des nombres de Reynolds Re < 10, dans lequel le fluide à faire tourner passe par des microcanaux disposés les uns derrière les autres et reliés entre eux, disposés angulairement les uns par rapport aux autres, ce qui fait que le fluide qui s'écoule subit à chaque fois des changements de direction qui provoquent globalement une rotation du fluide autour de l'axe dans la direction d'écoulement, le flux de fluide étant tourné autour de l'axe d'écoulement lors du passage par les transitions de canaux entre les microcanaux, à chaque fois d'un angle α qui dépend de la géométrie du canal et de l'angle β entre les segments de canal, **caractérisé en ce que**

   • les microcanaux sont réalisés avec une section de canal semi-circulaire,
   • le fluide traverse six transitions de canal coudées l'une par rapport à l'autre selon un angle β de 32 degrés, l'angle de rotation α de la lamelle de fluide dans les différentes transitions n'étant pas uniforme mais dépendant plutôt de l'angle de coude β et de l'orientation respective de la lamelle entrante, de sorte qu'il y a au total six rotations des fluides et que l'angle total des rotations de fluide donne un total de 90 degrés dans la somme des angles partiels
   • et **en ce qu'**une focalisation hydrodynamique est effectuée avant la rotation du fluide, **en ce que** l'amenée de liquides auxiliaires est effectuée avec une pression telle qu'une lamelle de fluide orientée perpendiculairement au plan de la puce est produite, laquelle est tournée autour de l'axe d'écoulement par la rotation du fluide, et **en ce qu'**une deuxième focalisation hydrodynamique est effectuée après cette rotation du fluide, qui est réglée à 90 degrés, ce qui permet de reformer la lamelle de fluide homogène orientée parallèlement au plan de puce, dans lequel, dans la deuxième unité de focalisation hydrodynamique, l'alimentation des liquides auxiliaires est effectuée avec une pression telle que la lamelle de fluide orientée parallèlement au plan de puce est légèrement comprimée pour obtenir une lamelle de fluide homogène qui n'est pas influencée par les parois du canal, de sorte qu'elle est notamment maintenue libre par les parois du canal.

2. Agencement pour la mise en oeuvre d'un procédé selon la revendication 1 sous la forme d'une unité de rotation de fluide (5) dans un système de puce à deux couches, dans lequel des segments de canal (6) sont introduits en tant que micro-canaux alternativement dans le substrat supérieur et le substrat inférieur de telle sorte qu'après la liaison des deux couches de puce, les canaux précédemment ouverts sont fermés par la surface de l'autre couche de puce respective et qu'une liaison avec le segment de canal suivant n'existe qu'aux extrémités des micro-canaux, constitué de six segments de canal (6) disposés les uns derrière les autres, reliés entre eux de manière décalée à leurs extrémités ou latéralement, avec une section transversale de canal semicirculaire, les deux segments de canal (6) reliés respectivement entre eux étant disposés sous un angle β de 32 degrés les uns par rapport aux autres, une unité de focalisation hydrodynamique (2) étant introduite dans le système de puce à deux longueurs avant l'agencement pour la rotation du fluide (5) et une deuxième unité de focalisation hydrodynamique (7) étant introduite après l'agencement pour la rotation du fluide.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070177458 A1
- US 2009114285 A1
- US 2002076350 A1
- US 2007177458 A1

**In der Beschreibung aufgeführte Nicht-Patentliteratur**

- **XUAN, X. ; ZHU, J. ; CHURCH, C.** Particle focusing in microfluidic devices Microfluid. *Nanofluid.,* 2010, vol. 9 (1), 1-16